# EUROPÄISCHE PATENTSCHRIFT

(11) **EP 1 120 150 B1**
(45) Veröffentlichungstag und Bekanntmachung des Hinweises auf die Patenterteilung: **08.02.2006**
(21) Anmeldenummer: 00124686.7
(22) Anmeldetag: 11.11.2000
(51) Int. Cl.: B01D 63/10, B01D 65/08

(54) **Membrantrennvorrichtung**
Membrane separation apparatus
Appareil de séparation à membranes

(30) Priorität: 16.10.2000 DE 10051168; 23.03.2000 DE 10014498; 26.01.2000 DE 10003422
(43) Veröffentlichungstag der Anmeldung: 01.08.2001
(73) Patentinhaber: ENVIRO-CHEMIE GmbH, 64380 Rossdorf (DE)
(72) Erfinder: Kohlheb, Robert, Dr., 29336 Nienhagen (DE); Muhl, Axel, 29221 Celle (DE); Rajkai, Zsombor, 3700 Kazincbarcika (HU); Braun, Gerhard, Dr., 51491 Overath (DE)
(74) Vertreter: Behrens, Helmut

(56) Entgegenhaltungen:
- DE-A- 1 546 657
- DE-A- 3 005 408
- US-A- 4 834 881
- OINUMA M ET AL: "New pretreatment systems using membrane separation technology" DESALINATION, ELSEVIER SCIENTIFIC PUBLISHING CO, AMSTERDAM, NL, Bd. 98, Nr. 1, 1. September 1994 (1994-09-01), Seiten 59-69, XP004019233 ISSN: 0011-9164

## Beschreibung

Die Erfindung betrifft eine Membrantrennvorrichtung zum Abtrennen von niederkolloidalen und niedermolekularen Belastungsstoffen sowie mehrwertigen Ionen (Schwermetalle) aus wäßrigen Medien gemäß Oberbegriff des Anspruchs 1.

Es existieren zur Zeit unterschiedliche Trenntechniken wie chemische und mechanische Trennverfahren zur Abtrennung oben genannter Belastungsstoffe.

Bei den chemischen Verfahren werden überwiegend oxidative Prozesse angewendet" wobei z.B. Hydrogenperoxid (H₂O₂) oder Ozon (O₃) eingesetzt werden.

Seit einigen Jahren werden stattdessen zunehmend Membranverfahren eingesetzt.

Die Membrantrennverfahren, die hier zum Einsatz kommen, sind die Mikro-, Ultra-, und Nanofiltration sowie die Umkehrosmose..Die genannten Verfahren sind druckgetrieben und unterscheiden sich in der transmembranen Druckdifferenz und in der Trenngrenze.

Abhängig von der Porengröße und der eingesetzten Membran arbeitet die Mikrofiltration in einem Druckbereich von 1 - 10 bar und trennt dabei Stoffe in einer Größe von 0,075 - 5 µm gelegentlich auch bis 10 µm ab.

Die Ultrafiltration arbeitet bei Drücken von 1 - 10 bar und mit Porengrößen um 0,005 - 0,2 µm.

Beide Filtrationsverfahren, die Mikro- und die Ultrafiltration, basieren auf Porenmembranen. Der Wassertransport ist hier konvektiver Art.

Wenn man beachtet, daß bei der Draufsicht die Poren der Polymermenbranen mehr oder weniger kreisförmig sind, ist für die Rückhaltbestimmung der mittlere Moleküldurchmesser im Verhältnis zum Porendurchmesser eindeutiger als das Molekulargewicht.

Die abgetrennten Stoffe bilden auf der Membranoberfläche der Feedseite eine Deckschicht als Sekundärmembran, die entscheidend für das Trennverhalten des Verfahrens ist. So steigt mit Anwachsen dieser Schicht die Trenngrenze der Membran, die Deckschicht dient also als eine Art zweiter Filter. Andererseits sinkt aber drastisch der Permeatfluß.

Diese Deckschicht kann ein Gleichgewicht zwischen Abbau und Neubildung besitzen. D. h. der Fluß stellt sich auf einen stationären Endwert ein.

In der Regel stellt sich allerdings kein Gleichgewicht ein: der Permeatfluß wird immer geringer.

Damit der Fluß nicht zu sehr absinkt, sind Rückspülungen mit dem Permeat oder chemische Reinigungen in bestimmten Intervallen nötig.

Während des Trennprozesses können unterschiedliche Chemikalien, Stabilisatoren oder Inhibitoren, eingesetzt werden, um das Fouling und Scaling in den Poren zu verhindern.

Niedermolekulare Bestandteile, Kolloide und Stoffe, die die Eigenschaft besitzen, zu agglomerieren, können die Kanäle der Poren verstopfen und sind dadurch ein großes Problem für Mikro- und Ultrafilterverfahren. Diese Materialien setzen sich in den Poren fest und können nur durch chemische Reinigungen entfernt werden, wenn das Teilchen, das die Verstopfung verursacht hat, mit dem Reinigungsmittel löslich ist. Sonstige unlösliche Partikel bleiben in den Poren fest. Der Permeatfluß sinkt also mit der Standzeit des Filters immer weiter ab trotz regelmäßiger Reinigungen und Rückspülungen.

Durch diese partikulären Bestandteile, die in den Poren festsitzen, wird das Biofouling angeregt, das sich auf die Permeatqualität und auf die Standzeit der Membranen auswirken kann.

Insbesondere bei der biologischen oder oxidativen Vorbehandlung ist eine Verkleinerung der organischen Moleküle in Kauf zu nehmen. Damit ist festzuhalten, daß poröse MF(Mikrofilter) - und UF(Ultrafilter) -Membranen keinen sicheren Rückhalt von niedermolekularen organischen Bestandteilen gewährleisten. Es ist also bei diesen niedermolekularen organischen Stoffen (< 1000 D) keine ausreichende Senkung von CSB und BSB₅-Werten erreichbar.

Das Verfahren der Nanofiltration setzt porenfreie Membranen ein. Dabei gehen die permeierenden Komponenten auf der Feedseite in die Membran in Lösung, diffundieren durch die Membran und desorbieren auf der Permeatseite.

Ein anderer sehr wichtiger Einfluß auf den Stofftransport ist der elektrische Effekt auf der Oberfläche der Membran. Die negativen Ladungen an der Oberfläche der Membran bewirken, daß das Rückhaltevermögen für ein- und mehrwertige Ionen stark unterschiedlich ist.

Aufgrund der negativen Ladung an der Oberfläche der Membran (ξ-Potential) ist auch die richtige pH-Wert-Einstellung des Mediums wichtig für eine ausreichende Permeatqualität.

Der pH-Wert muß größer als 7 sein, da bei kleineren pH-Werten die freien H+-Ionen die negativen Ladungen an der Membran neutralisieren und so kein ausreichender Rückhalt erzielt werden kann.

Diese beiden Effekte, das Lösungs-Diffusions-Modell und die Oberflächenladung der Membran, werden bei der Nanofiltermembran zusammengefaßt.

Zusätzlich spielt der sog. Donnan-Effekt eine große Rolle. Der besagt, daß der Rückhalt einwertiger Ionen in Anwesenheit und mit steigender Konzentration mehrwertiger Ionen abnimmt und sogar negative Werte annehmen kann.

Durch die nahezu porenfreie Eigenschaft der Nanofilter wird ein akzeptablerer Rückhalt im Bezug auf CSB und BSB₅, insbesondere bei niedermolekularen organischen Bestandteilen, erreicht.

Weiterhin ist es notwendig nicht nur die Membraneigenschaften und Membrantrennverhalten bei unterschiedlichen flüssigen Medien zu analysieren, sondern auch die Form des Abstandselementes (Spacerform).

Es ist bekannt, dass Spiral-Wickelelemente insbesondere bei diffusiven Membran-Trennverfahren (NF und RO) eine sehr wirtschaftliche Modulbauform darstellen.

Wickelelemente benötigen feedseitig (und permeatseitig) Spacer. Die feedseitigen Spacer sind in unterschiedlicher Form verfügbar:
- Diamant-Spacer
- Parallel-Spacer
- Tubular-Spacer (Neüentwicklung)

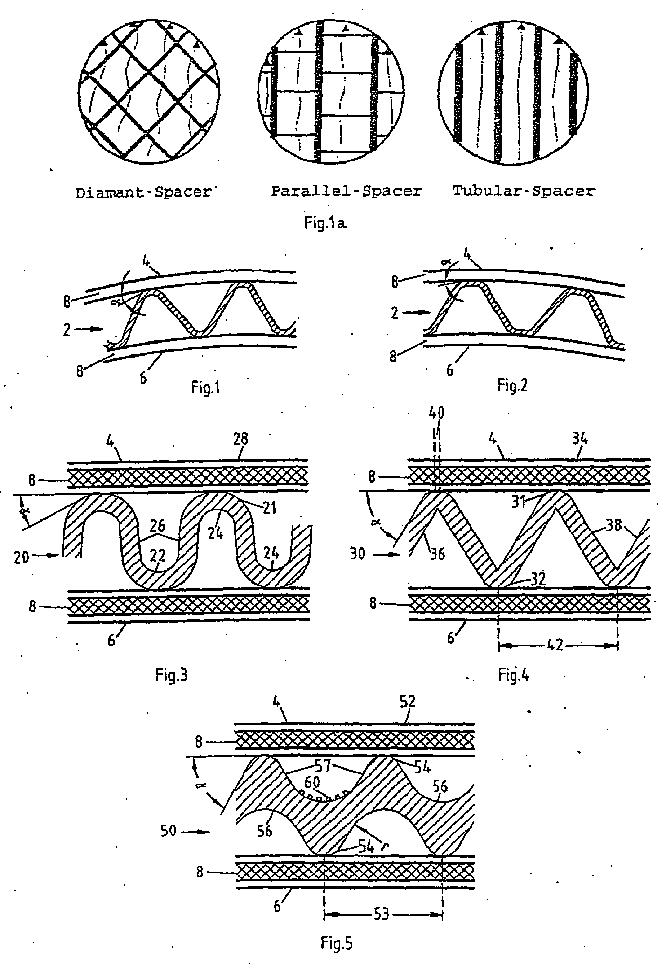

Die figur 1a zeigt unterschiedliche Spacerformen in der Draufsicht

Alle drei Spacer-Formen sind für unterschiedliche Einsatzgebiete entwickelt und optimiert worden. Hier muß der Anwender gezielt auswählen, welcher Spacer bei weichem Medium verwendet werden kann.

*Diamant-Spacer* sollten nur bei einfachen homogenen Medien verwendet werden, die nicht agglomerieren und kein Scaling (kristalline Auscheidungen) hervorrufen, z. B. vorbehandeltes Trinkwasser, ionogene-Lösungen und Emulsionen.

*Parallel-Spacer sind* für einfache heterogene Lösungen geeignet. Bei dieser Spacerform können gewisse Trübungen ohne partikuläre Ausscheidungen noch zugelassen werden, wie z. B. kontrollierter Biologie-Oberlauf, kolloidale Lösungen, im Lösungsmittel enthaltene Pigmente und Proteine.

*Tubular-Spacer können* bei komplexen heterogenen Lösungen eingesetzt werden. Bei Aufkonzentrieren dieser komplexen Medien können sich Ausscheidungen unterschiedlichster Art bilden wie kristalline Ausscheidungen (Scaling) und Zusammensetzung niederpartikulärer Bestandteile (Agglomeration) z. B. aus industriellen Abwässern, Mutterlauge für Regeneration, Spülabwasser aus Ionenaustauscher und Recyclingwasser von Flaschenwaschanlagen.

Ein Fouling kann bei allen drei Spacerformen unabhängig von der Auswahl vorkommen. Hier kann nur eine chemische Reinigung oder bei Tubular-Spacern mit porenfreien Membranen eine Spülung mit drastisch erhöhter Durchströrnungsgeschwindigkeit helfen.

Während die Diamant- und Parallel-Spacer durch ihre Form unterschiedliche Turbulenzeffekte ausüben, um einen besseren Trennvorgang hervorzurufen, gewährleistet der Tubular-Spacer selbst bei höherer Durchflußgeschwindigkeit eine geringere Turbulenz des Mediums. Der Tubular-Spacer benötigt damit eine höhere Durchflußgeschwindigkeit, was aber einen höheren Energieverbrauch zur Folge hat. Andererseits wird bei geringerer Durchströmung die Membranoberfläche bei Verwendung des Tubular-Spacers schneller belegt.

Ein Kompromiß dieses Problems wird erreicht durch:
1. Eine geringere Durchströmung des Moduls und damit ein geringerer Energieverbrauch aber eine größere Belegung der Membran in Betriebsphase.
2. Periodisch werden kurzzeitig die Einzelmodule mit höherer Durchströmung mit eigenem Zulaufmedium oder mit reinem Wasser ohne Permeatabgabe gespült. Dadurch lösen sich die Belegungen der porenfreien Membranoberfläche ab.

Durch die Verwendung des Tubular-Spacers werden wesentlich weniger Reinigungschemikalien benötigt und damit sowohl ein ökologischer als auch ein ökonomischer Vorteil erzielt.

Aus der DE 30 05 408 ist eine semipermeable Membrantrennvorrichtung bekannt, die Membranwickelelemente aufweist, zwischen deren Wickellagen wellenförmige Abstandselemente angeordnet sind. Diese Abstandselemente bestehen aus einer Kunststofffolie, deren beide Seiten um eine Wellenhälfte versetzt zueinander angeordnete Wellenstrukturen aufweisen, die jeweils mit ihren Wellenbergen an den Membran-Wickellagen anliegen. Maßnahmen zur Turbulenzerhöhung der.Strömung in den durch die Wellentäler gebildeten Strömungskanäle sind nicht vorgesehen.

Durch die US 4834881 ist ein Membranmodul für eine Wasseraufbereitungsvorrichtung bekannt mit spiralförmig aufgewickelten Membran-Wickelelementen. Zwischen den Wickellagen sind zickzackförmige Abstandselemente angeordnet. Auf den seitlichen Flanken der zickzackförmigen Abstandselemente sind beabstandete, sich bis zum First erstreckende Vorsprünge ausgebildet zur Erzeugüng von Strömungsturbulenzen. Diese als Turbulenzelemente wirkenden Vorsprünge erhöhen allerdings die Membranabdeckung, wodurch die freie, wirksame Membranfläche verkleinert und die Trennleistung der Vorrichtung verringert wird.

Die Aufgabe der vorliegenden Erfindung besteht darin, eine Membrantrennvorrichtung mit Spiral-Wickelelementen so auszubilden, daß die effektive Membranfläche vergrößert, die Foulinggefahr minimiert und der Volumenstrom verringert werden kann.

Diese Aufgabe wird durch die Erfindung gemäß Anspruch 1 gelöst.

Vorteilhafte und zweckmäßige Weiterbildungen der Aufgabenlösung sind in den Unteransprüchen angegeben.

Die Erfindung soll nachfolgend anhand der beigefügten Zeichnung näher erläutert werden.

Es zeigt
- Fig. 1a: unterschiedliche Spacerformen in der Draufsicht,
- Fig. 1: eine schematische Teilansicht einer bekannten Ausführungsform eines Abstandselementes (Spacer) für ein Spiral-Wickelelement im unbelasteten Zustand,
- Fig. 2: das Abstandselement nach Fig. 1 im durch Wickeldruck belasteten Zustand,
- Fig. 3: eine schematische Teilsansicht einer Ausführungsform eines bekannten Abstandselementes (Spacer) eines Spiral-Wickelelementes,
- Fig. 4: eine schematische Teilansicht einer bekannten Ausführungsform eines Abstandselementes (Spacer) eines Spiral-Wickelelementes,
- Fig. 5: eine schematische Teilansicht eines erfindungsgemäßen Abstandselementes (Spacer) eines Spiral-Wickelelementes,
- Fig. 6: schematisch eine weitere Ausführungsform eines erfindungsgemäßen Abstandselementes (Spacer) eines Spiral-Wickelelementes (Schnitt B-B durch das Abstandselement nach Fig. 9),
- Fig. 7: eine Draufsicht auf das Abstandselement nach Fig. 6,
- Fig. 8: einen Schnitt A-A durch das Abstandselement nach den Fig. 6 und 7,
- Fig. 9: eine schematische Schrägdraufsicht auf das Abstandselement nach den Fig. 6 bis 8 und
- Fig. 10 und 11: schematisch zwei weitere Ausführungsformen des Abstandselementes in der Draufsicht.

Gleiche Bauteile in den Figuren der Zeichnung sind mit den gleichen Bezugszeichen versehen.

Die Fig. 1 und 2 zeigen ein bekanntes sinuswellenförmiges Abstandselement 2 zwischen zwei Membranlagen 4, 6 eines Wickelelementes im unbelasteten Zustand. Mit dem Bezugszeichen 8 sind Permeat-Membrantaschen bezeichnet. Bei diesem Abstandselement ist der Winkel α zwischen Membran und Abstandselement relativ klein, was strömungstechnisch ungünstig ist und die Gefahr birgt, daß sich Feststoffe festsetzen, wodurch erhöhte Foulinggefahr besteht. Durch den stets auftretenden Wikkeldruck wird im praktischen Betrieb die an der Membran anliegende Rundung des Abstandselementes abgeflacht, vgl. Fig. 2, wodurch zum einen die freie effektive Membranfläche verringert wird und sich auch der Winkel α verkleinert. Hierdurch verschlechtert sich die Durchströmung des Abstandselementes und erhöht sich die Foulinggefahr.

Die Fig. 3 zeigt ein bekanntes Abstandselement 20 in Wellenform, bei dem die Wellenberge 21 und Wellentäler 22 U-förmig ausgebildet sind. Der U-Steg 24 der Wellenberge und Wellentäler ist teilkreisförmig oder bogenförmig ausgebildet. Die U-Schenkel 26 der Wellenberge und Wellentäler sind in etwa senkrecht zu den Membranflächen 28 angeordnet. Durch diese Ausbildung ergibt sich ein größerer Winkel α zwischen der Membranfläche 28 und dem Abstandselement als bei der bekannten Ausführungsform nach den Fig. 1 und 2. Die Stabilität ist verbessert und auch der Abflachungseffekt durch den Wickeldruck ist geringer. Allerdings ist die durch das Abstandselement 20 abgedeckte Membranfläche pro Wellenhälfte noch relativ groß. Der Strömungsquerschnitt ist ebenfalls relativ groß, so daß sich entsprechend große Volumenströme ergeben.

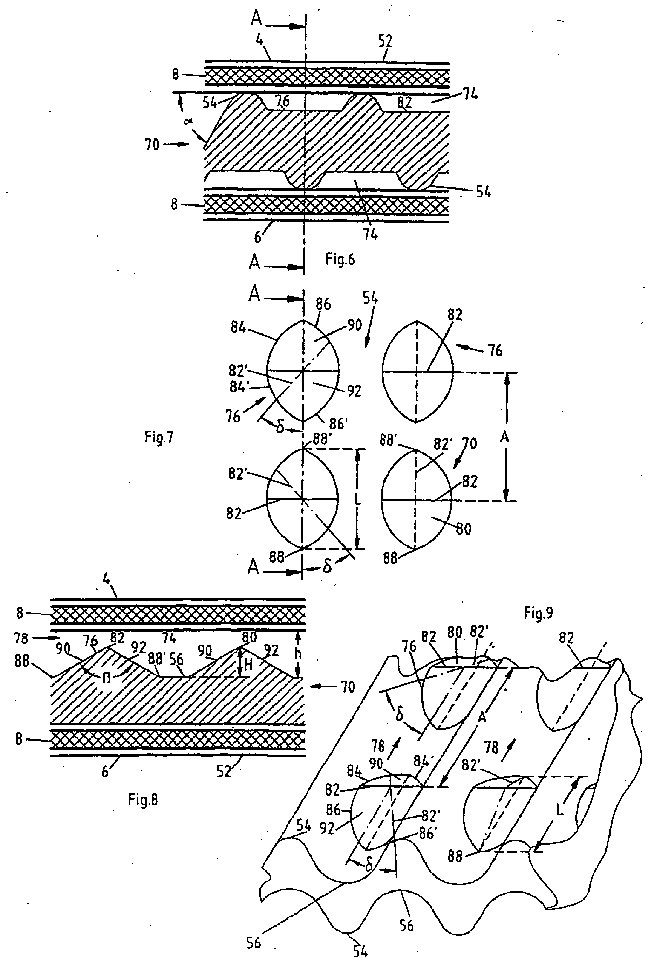

Die Fig. 4 zeigt ein bekanntes Abstandselement 30 in ZickZack-Form, d. h. die Wellenberge 31 und Wellentäler 32 sind dreieckförmig ausgebildet. Hierdurch entsteht ein sehr großer Winkel α, bspw. von 60°, zwischen der Membran 34 und den Flanken 36, wodurch die Gefahr eines Festsetzens von Belastungsstoffen praktisch vermieden ist. Die Foulinggefahr ist dadurch minimiert. Durch die Dreiecksform der Wellenberge und Wellentäler ergibt sich eine dreieckförmige Strömungsfläche 38. Die Berührungsfläche 40 mit der Membran ist sehr klein, wodurch sich eine größere freie effektive Membranfläche 42 ergibt. Auch ist der Volumenstrom durch diese Abstandselementform noch relativ groß. Das Abstandselement 30 ist statisch ungünstig, weil durch den Wickeldruck die Gefahr besteht, daß die Flanken 36 einknicken und das Abstandselement zusammenbricht. Dieser Gefahr kann durch geeignete Wahl der Materialstärke teilweise begegnet werden, wobei Materialstärken von 0,05 mm bis 0,5 mm verwendbar sind. Die Wandungsstärke kann aber nicht zu groß gewählt werden, da sonst die freie effektive Membranfläche zu sehr verringert wird. Ein günstiger Abstand zwischen den Membranlagen 4 und 6 beträgt bspw. etwa 1,016 mm.

Die Fig. 5 zeigt ein Abstandselement 50 bestehend aus einer relativ dicken Kunststoffolie, deren beide Seiten identische Wellenstrukturen aufweisen, die um eine Wellenhälfte versetzt zueinander angeordnet sind. Die Wellenstrukturen liegen jeweils mit ihren Wellenbergen 54, 54' an den Membran-Wickellagen 4, 6 an. Der Spitzenwinkel oder der Radius der Wellenberge 54, 54' und der Radius r der vorzugsweise bogenförmig ausgebildeteten Wellentäler 56 sind wählbar. Der Radius der Wellenberge kann bspw. 0,2032 mm, der Radius r der Wellentäler bspw. 0,635 mm und der Abstand zwischen den Membranlagen 4 und 6 bspw. 1,524 mm betragen.

Durch diese Ausbildung ergibt sich wie bei der Ausführungsform nach Fig. 4 eine relativ kleine Berührungsfläche zwischen Abstandselement 50 und den Membranen 52, wodurch sichergestellt ist, daß eine große effektive Membranfläche 53 erhalten wird. Außerdem ist durch diese Ausbildung gewährleistet, daß sich ein groBer Winkel α, bspw. von 60 °, zwischen dem Abstandselement und den Membranlagen ergibt, analog wie bei der Ausführungsform nach Fig. 4, so daß auch bei diesem Abstandselement 50 die Gefahr eines Zusetzens im Bereich dieses Winkels und damit die Gefahr eines Fouling weitestgehend vermieden ist. Durch die bogenförmige Ausbildung der Wellentäler 56 werden tunnelartige axial verlaufende Stömungskanäle 57 geschaffen, wobei der Radius r des Bogens in weiten Grenzen wählbar ist, wodurch der Vorteil entsteht, daß hierdurch der Strömungsquerschnitt in Abhängigkeit von den jeweiligen Medien so einstellbar ist, daß sich ein verringerter Volumenstrom ergibt. Durch diese Ausbildung des Abstandselementes 50 ergeben sich wesentlich größere Wandungsstärken als bei den zuvor beschriebenen Abstandselementen, wodurch das Abstandselement 50 sehr stabil ist und die Gefahr einer Abflachung der spitzen Wellenberge und die Gefahr eines Einknickens und Zusammenbrechens der Wände des Abstandselementes praktisch vermieden ist. Außerdem ergibt sich hierdurch der Vorteil, daß die freie effektive Membranfläche auch bei größeren Wickeldrucken groß gehalten werden kann.

Die Fig. 6 bis 9 zeigen eine weitere Ausführungsform 70 eines erfindungsgemäßen Abstandselementes für ein Membran-Wickelelement. Das Abstandselement 70 unterscheidet sich von dem Abstandselement nach Fig. 5 dadurch, daß die bogenförmigen Wellentäler 56 zur Turbulenzerhöhung Turbulenzelemente 76 aus in Richtung der Strömungskanäle 74 - also in Strömungsrichtung, s. Pfeil 78 - hintereinander angeordneten, beabstandeten, etwa dachartigen Erhöhungen 80 auf. Die Firstlinie 82 dieser Erhöhungen verläuft quer im Strömungskanal 74 und zur Strömungsrichtung 78 von einem Wellenberg 54 zum benachbarten Wellenberg. Die Firstlinien 82 der Erhöhungen 80 können aber auch unter einem beliebig wählbaren Winkel δ mit 0° ≤ δ ≤ 180° zur Strömungsrichtung 78 verlaufen, was in den Fig. 7 und 9 strichpunktiert eingezeichnet ist. Hierdurch können unterschiedliche Turbulenzen eingestellt werden. Die seitlichen abfallenden Ränder 84, 86, 84', 86' laufen bogenförmig aufeinander zu und laufen in einer Spitze 88, 88' auf der Wellentalsohle aus.

Die Höhe H des Firstes 82 über dem Niveau der Wellentäler 56 kann beispielsweise etwa 1/3 - 1/2 der Höhe h des Strömungskanals 74 betragen. Der Firstabstand A zwischen den aufeinanderfolgenden Erhöhungen 80 beträgt 1 L bis 10 L, wenn L die Länge der Erhöhungen 80 zwischen den Spitzen 88, 88' ist. Die Dachflächen 90, 92 der Erhöhungen schließen einen spitzen Winkel β ein, welcher zwischen 60° und 160°, vorzugsweise 110° bis 120°, gewählt wird. Der Winkel α zwischen den Membranen 52 und dem Abstandselement 70 wird zwischen 10° und 60° gewählt, was auch für die Ausführungsformen nach den Figuren 4 und 5 gilt.

Der Abstand zwischen benachbarten Membranlagen 4 und 6 des Wickelelementes kann beispielsweise etwa 2,032 mm, die Firsthöhe H etwa 0,406 mm und die Höhe h des Strömungskanales 74 etwa 0,975 mm betragen. Der Firstabstand A zwischen aufeinanderfolgenden Erhöhungen 80 kann beispielsweise 2,438 mm und die Länge L der Erhöhungen zwischen den Spitzen 88 und 88' etwa 1,626 mm betragen.

Die Turbulenzerhöhung durch die Turbulenzelemente 76 hat u. a. die vorteile, daß die Membranen 52 besser gereinigt werden können und es möglich ist, mit weniger Strömungsvolumen zu arbeiten, wodurch der Energiebedarf gesenkt werden kann.

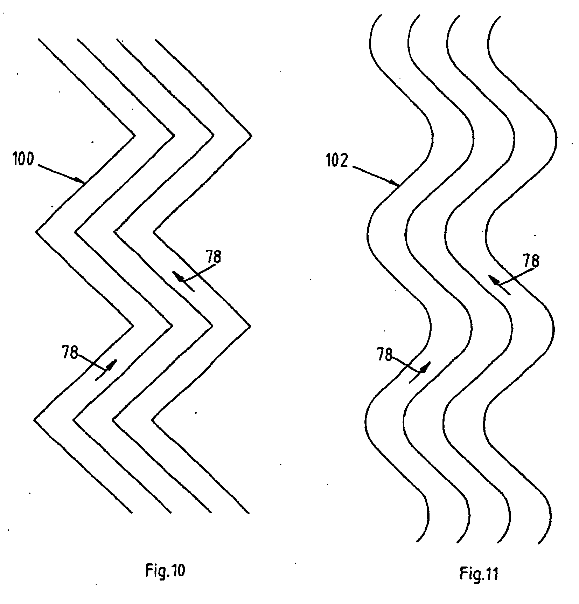

Anders als in den Fig. 1 bis 9 der Zeichnung dargestellt und beschrieben, können die Wellenberge 21, 31, 54 und die Wellentäler 22, 32, 56 der Wellenstrukturen anstelle eines geradlinigen Verlaufs einen zickzackförmigen Verlauf 100 oder einen wellen- bzw. schlangenförmigen Verlauf 102 haben, wie dies in den Fig. 10 und 11 schematisch dargestellt ist. Hierdurch ist eine weitere Turbulenzerhöhung erreichbar. Zusätzlich können Turbulenzeinbauten analog den Turbulenzelementen 76 bei der Ausführungsform nach Fig. 9 vorgesehen werden. Die zickzackförmigen und wellen- bzw. schangenförmigen Wellenstrukturen können zueinander parallel (wie dargestellt) oder auch in Strömungsrichtung versetzt zueinander ausgebildet sein.

Die Abstandselemente nach den Fig. 1 bis 11 werden aus Kunststoffolien auf Kalandern hergestellt, die für die Herstellung der Turbulenzelemente 60, 76 entsprechende Oberflächenausnehmungen aufweisen.

## Patentansprüche

1. Membrantrennvorrichtung zum Abtrennen von niederkolloidalen und niedermolekularen Belastungsstoffen sowie mehrwertigen Ionen aus wäßrigen Medien mit einem Membran-Wickelelement, bei dem zwischen den Membran-Wickellagen ein wellenförmiges Abstandselement angeordnet ist, das aus einer Kunststofffolie besteht, deren beide Seiten um eine Wellenhälfte versetzt zueinander angeordnete Wellenstrukturen aufweisen, die jeweils mit ihren Wellenbergen an den Membran-Wickellagen anliegen und deren Wellentäler Strömungskanäle bilden, **dadurch gekennzeichnet, daß** zur Turbulenzerhöhung der Strömung Turbulenzelemente (76) vorgesehen sind, die aus in Richtung der Strömungskanäle (57, 74) hintereinander angeordneten, beabstandeten, dachartigen Erhöhungen (80) bestehen, die in den Wellentälern (22, 32, 56) der Abstandselemente angeordnet sind, deren Dachfirste (82) quer oder unter einem Winkel δ mit 0° ≤ δ ≤ 90° zu den Strömungskanälen (74) verlaufen, sich von einem Wellenberg zum benachbarten Wellenberg (21, 31, 54) erstrecken und deren Höhe (h) geringer ist als die Höhe (h) der Strömungskanäle.

2. Membrantrennvorrichtung nach Anspruch 1, **dadurch gekennzeichnet, dass** die Wellenberge (21, 31, 54) und die Wellentäler (22, 32, 56) der Wellenstrukturen zickzackförmig oder wellen- bzw. schlangenförmig ausgebildet sind.

3. Membrantrennvorrichtung nach Anspruch 2, **dadurch gekennzeichnet, daß** die zickzackförmigen oder wellen- bzw. schlangenförmigen Wellenstrukturen parallel oder parallel versetzt zueinander ausgebildet sind.

4. Membrantrennvorrichtung nach Anspruch 1, **dadurch gekennzeichnet, daß** die dachartigen Turbulenzelemente (76) seitlich abfallende Ränder (84, 86, 84', 86') aufweisen, die bogenförmig aufeinander zulaufen und in einer Spitze (88, 88') auf der Wellentalsohle auslaufen.

5. Membrantrennvorrichtung nach Anspruch 1 oder 4, **dadurch gekennzeichnet, daß** die Höhe H des Firstes (82) über dem Niveau des Wellentales (56, 72) 1/3 - 1/2 der Höhe h des Strömungskanales (57, 74) beträgt.

6. Membrantrennvorrichtung nach einem der Ansprüche 1-4, **dadurch gekennzeichnet, daß** der Firstabstand A der aufeinanderfolgenden Erhöhungen (80) 1 L bis 10 L beträgt, wenn L die Länge der Erhöhungen (80) zwischen den Spitzen (88, 88') ist.

7. Membrantrennvorrichtung nach einem der Ansprüche 1-6, **dadurch gekennzeichnet, daß** die Dachflächen (90, 92) der Erhöhungen (80) einen Spitzenwinkel β von 60° bis 160° vorzugsweise 110° bis 120° einschließen.

8. Membrantrennvorrichtung nach Anspruch 1, **dadurch gekennzeichnet, daß** der Winkel α zwischen den Membranen und den Flanken der Wellenberge 10° bis 60° beträgt.

9. Membrantrennvorrichtung nach Anspruch 5, **dadurch gekennzeichnet, daß** der Abstand zwischen benachbarten Membranlagen (4, 6) des Wickelelementes 2,032 mm, die Höhe H des Firstes (82) 0,406 mm und die Höhe h des Strömungskanales (74) 0,975 mm betragen.

10. Membrantrennvorrichtung nach Anspruch 6, **dadurch gekennzeichnet, daß** der Firstabstand A zwischen aufeinanderfolgenden Erhöhungen (80) 2,438 mm und die Länge L der Erhöhungen zwischen den Spitzen (88, 88') 1,626 mm betragen.

## Revendications

1. Filtre moléculaire à membrane, destiné à la séparation de contaminants à faible teneur en colloïdes et de faible poids moléculaire ainsi que des ions plurivalents dans les milieux aqueux au moyen d'un élément à membrane à enroulement, où un élément écarteur ondulé qui se trouve disposé entre les couches des enroulements de la membrane est constitué par un film en matière synthétique dont la structure ondulée est décalée des deux côtés, l'une par rapport à l'autre, et dont les sommets se trouvent des deux côtés en contact avec les couches d'enroulements de la membrane, et dont les creux forment des canaux pour le passage du débit, **caractérisé en ce, que** des éléments de turbulence de débit (76) sont prévus pour accroître la turbulence, constitués par des projectures en forme de toit (80) disposées en succession, mais à l'écart l'une de l'autre dans le sens des canaux du débit (57, 74), et des éléments séparateurs disposés dans les creux (22, 32, 56), où les faîtages (82) sont dirigés transversalement ou sous un angle δ où 0°≤ δ ≤ 90° par rapport aux canaux de débit (74), et s'étendent d'un sommet au sommet adjacent (21, 31, 54) et dont la hauteur (H) est inférieure à la hauteur (h) des canaux de débit.

2. Filtre moléculaire à membrane selon la revendication 1, **caractérisé en ce, que** les sommets des ondes (21, 31, 54) et les creux des ondes (22, 32, 56) des structures ondulées forment un zigzag ou ont une forme ondulatoire ou serpentine.

3. Filtre moléculaire à membrane selon la revendication 2, **caractérisé en ce, que** les structures en zigzag ou ondulatoires, ou serpentines sont disposées parallèlement ou décalées l'une par rapport à l'autre.

4. Filtre moléculaire à membrane selon la revendication 1, **caractérisé en ce, que** les éléments de turbulence du débit (76) en forme de toit ont des arêtes curvilignes inclinées latéralement (84, 86, 84', 86'), dirigées l'une vers l'autre et convergentes en un point (88, 88') à la base de l'onde.

5. Filtre moléculaire à membrane selon la revendication 1 ou 4, **caractérisé en ce, que** la hauteur (H) du faîtage (82) au-dessus du niveau du fond (56, 72) est approximativement de ⅓ à ½ de la hauteur h du canal de débit (57, 74).

6. Filtre moléculaire à membrane selon l'une des revendications 1 à 4, **caractérisé en ce, que** l'écart au faîtage A des projectures successives (80) est de 1 L à 10 L, où L est la longueur des projectures (80) entre les crêtes (88, 88').

7. Filtre moléculaire à membrane selon l'une des revendications 1 à 6, **caractérisé en ce, que** les surfaces des toits (90, 92) des projectures (80) comprennent un angle au sommet β de 60° à 160 ° préférentiellement de 100° à 120°.

8. Filtre moléculaire à membrane selon la revendication 1, **caractérisé en ce, que** l'angle α entre les membranes et les flancs des crêtes d'onde se situe entre 10° et 60°.

9. Filtre moléculaire à membrane selon la revendication 5, **caractérisé en ce, que** la distance entre les couches des membranes adjacentes (4, 6) de l'élément à enroulement est égale à 2, 032 mm, la hauteur H au faîtage (82) est égale à 0,406 mm et la hauteur h du canal de débit (74) est égale à 0,975 mm.

10. Filtre moléculaire à membrane selon la revendication 6, **caractérisé en ce, que** l'écart du faîtage A de deux projectures successives (80) est égal à 2,438 mm et la longueur L des projectures entre les crêtes (88, 88') est égale à 1,626 mm.

## Claims

1. Membrane separator for separating out low-colloidal and low-molecular contaminants as well as polyvalent ions from aqueous media by means of a wound membrane element in which a corrugated distance piece (spacer) is arranged between the membrane winding layers, which consists of a plastic foil having a corrugated structure on both sides offset by one half-corrugation with respect to each other and where the crests on both sides make contact with the layers of the membrane windings and where the troughs form flow channels, **characterized in that** turbulence elements (76) are provided to increase the turbulence, consisting of roof-like projections (80) arranged in succession at a distance from each other in the direction of the flow channels (57, 74) and positioned in the troughs (22, 32, 56) of the distance elements, where the ridges (82) run transverse to the flow channels (74) or at an angle δ where 0° ≤ δ ≤ 90°, extending from one crest to the adjacent crest (21, 31, 54) and the height of which (H) is lower than the height of the flow channels (h)

2. Membrane separator according to claim 1, **characterized in that** the crests (21, 31, 54) and the troughs (22, 32, 56) of the corrugated structures are arranged in a zigzag or wavy shape.

3. Membrane separator according to claim 2, **characterized in that** the zigzag or wavy corrugated structures are arranged parallel or offset with respect to each other.

4. Membrane separator according to claim 1, **characterized in that** the roof-like turbulence elements (76) have lateral descending edges (84, 86, 84', 86') running towards each other in curving lines and converging at a point (88, 88') at the base of the trough.

5. Membrane separator according to claim 1 or 4, **characterized in that** the height H of the ridge (82) above the level of the trough (56, 72) is approximately ⅓ to ½ of the height h of the flow channel (57, 74).

6. Membrane separator according to one of the claims 1 to 4, **characterized in that** the ridge distance A of the successive projections (80) is 1 L to 10 L, where L is the length of the projections (80) between the points (88, 88').

7. Membrane separator according to one of the claims 1-6, **characterized in that** the roof areas (90, 92) of the projections (80) enclose an apex angle β of 60° to 160°, prerferably 110° to 120°.

8. Membrane separator according to claim 1, **characterized in that** the angle α between the membranes and the sides of the crests is 10° to 60°.

9. Membrane separator according to claim 5, **characterized in that** the distance between adjacent membrane layers (4, 6) of the wound element is 2.032 mm, the height H of the ridge (82) 0.406 mm and the height h of the flow channel (74) 0.975 mm.

10. Membrane separator according to claim 6, **characterized in that** the ridge distance A between successive projections (80) is 2.438 mm, and the length L of the projections between the points (88, 88') is 1.626 mm.
